# DEMANDE DE BREVET EUROPEEN

(11) **EP 0 823 292 A1**
(43) Date de publication de la demande: **11.02.1998**
(21) Numéro de dépôt: 97401872.3
(22) Date de dépôt: 04.08.1997
(51) Int. Cl.: B08B 7/00, G21C 21/02

(54) **Procédé et dispositif de dépoussiérage de pastilles de combustible nucléaire au moyen d'un faisceau laser**

(30) Priorité: 06.08.1996 FR 9609907
(71) Demandeur: COMPAGNIE GENERALE DES MATIERES NUCLEAIRES, F-78140 Velizy Villacoublay (FR)
(72) Inventeur: Picco, Bernard, 84000 Avignon (FR); Marchand, Michel, 783330 Fontenay Le Fleury (FR)
(74) Mandataire: Dubois-Chabert, Guy

(57) **Abrégé**

L'invention concerne un procédé de dépoussiérage d'au moins une pastille (7) de combustible nucléaire ayant subi une opération de rectification qui a laissé subsister sur une surface de la pastille des poussières du matériau constituant cette pastille, caractérisé en ce qu'il consiste à :
- soumettre ladite surface à l'impact d'un faisceau laser (3) de caractéristiques propres à provoquer la désincrustation des poussières de ladite surface,
- éliminer de ladite surface les produits résultant de la désincrustation des poussières.

Elle concerne également un dispositif permettant la mise en oeuvre de ce procédé.

Application notamment au dépoussiérage de pastilles MOX.

## Description

La présente invention se rapporte à un procédé de dépoussiérage de pastilles de combustible nucléaire au moyen d'un faisceau laser. Elle se rapporte également à un dispositif pour la mise en oeuvre de ce procédé.

Les combustibles utilisés dans l'industrie nucléaire sont composés d'éléments à géométrie cylindrique constitués de colonnes de pastilles, chaque colonne de pastilles étant disposée dans une gaine. Les pastilles peuvent être constituées d'oxyde d'uranium de teneur en ²³⁵U variable associé ou non avec un autre oxyde comme notamment l'oxyde de plutonium PuO₂. Les pastilles formées par un mélange d'oxydes d'uranium UO₂ et de plutonium PuO₂ sont appelées pastilles MOX (Mixed OXyde). Ces pastilles sont réalisées par compactage de poudre d'UO₂ ou d'un mélange de poudres d'UO₂ et de PuO₂ selon le type de pastille, suivi d'un frittage à haute température. Elles subissent éventuellement une opération de rectification pour respecter les exigences sur leur diamètre. Cette opération est indispensable dans le cas où le procédé de fabrication ne permet pas de respecter directement sans rectification les tolérances diamétrales finales. Ceci est le cas par exemple des pastilles pour réacteur à eau légère.

L'opération de rectification se fait par usinage des pastilles entre deux meules, ce qui provoque la formation de poussières dont certaines restent incrustées sur la surface cylindrique des pastilles. Les poussières de rectification sont des particules microniques et submicroniques constituées d'un matériau identique au matériau constitutif des pastilles. Les pastilles sont empoussiérées selon un taux moyen variable en fonction de la nature des meules utilisées, de l'épaisseur d'usinage, etc.

Ces poussières, plus ou moins adhérentes à la surface des pastilles rectifiées, peuvent par la suite se déposer dans les installations et constituer une source d'irradiation particulièrement marquée dans le cas des combustibles à base d'oxyde de plutonium où il y a formation d'américium en quantité croissante avec le temps. Les poussières peuvent aussi perturber les opérations automatisées de tri final des pastilles et générer de faux rebuts. Elles provoquent également un empoussiérage des dispositifs d'engainage lors de l'introduction des pastilles dans les gaines afin de constituer les crayons de combustible.

La présente invention a été réalisée afin de remédier à ces inconvénients. Elle permet le dépoussiérage de pastilles de combustible nucléaire, et notamment le dépoussiérage des pastilles MOX, rectifiées et arrivant en flux continu. L'élimination des poussières de rectification selon la présente invention procure les avantages suivants :
- suppression de la dispersion des particules de matières radioactives en aval de la rectifieuse (contamination résiduelle) et élimination de l'empoussiérage des installations et des matériels placés dans les boîtes à gants ;
- les contrôles automatiques d'aspect effectués sur les pastilles et permettant leur tri correct ne sont pas faussés, ce qui évite la mise au rebut de certaines pastilles ;
- suppression de l'empoussiérage des dispositifs d'engainage permettant, lors de la mise en gaine des pastilles pour constituer les crayons, de supprimer la contamination de ces crayons.

On connaît un dispositif de dépoussiérage de pastilles de combustible nucléaire au moyen d'un flux laminaire de gaz. Ce dispositif est décrit dans le document FR-A-2 699 317. Il comprend un tube de dépoussiérage à l'intérieur duquel circulent les pastilles à dépoussiérer. Le tube est muni à son extrémité d'entrée d'un orifice d'injection de gaz, d'une ouverture d'introduction des pastilles et de moyens pour créer un flux de gaz laminaire de dépoussiérage, d'une vitesse d'au moins 25 m/s, autour des pastilles circulant dans le tube, ce flux de gaz étant parallèle et de même sens que le sens de déplacement des pastilles et le tube de dépoussiérage étant en outre muni à son extrémité de sortie d'un orifice d'aspiration de gaz et des poussières et d'une ouverture de récupération des pastilles dépoussiérées.

Pour dépoussiérer les pastilles de combustible nucléaire, et notamment pour éliminer les poussières incrustées à la surface des pastilles, après l'opération de rectification, on propose, selon la présente invention, d'utiliser un faisceau laser de puissance appropriée.

Il est connu d'utiliser l'impact d'un faisceau laser pour nettoyer la surface d'un objet. On peut ainsi nettoyer des surfaces polluées par des dépôts de composés venant de l'environnement afin de leur redonner leur état initial, par exemple pour restaurer des oeuvres d'art. C'est le cas du document EP-A-0 380 387 qui divulgue un procédé de nettoyage de la surface de matériaux (en particulier de la pierre, du verre, de l'acier, de la céramique, du bois, du papier ou du carton) mettant en oeuvre un faisceau laser qui est focalisé sur la surface a nettoyer. La "puissance crête" du laser utilisé à cet effet est réglée à une valeur comprise entre quelques centaines de kW et quelques dizaines de MW. Le diamètre du faisceau laser sur la surface à nettoyer est choisi de façon à obtenir sur cette surface une densité de "puissance crête" comprise entre quelques dixièmes de MW/cm² et quelques dizaines de MW/cm². L'installation décrite comporte notamment un laser et un système optique destiné à séparer le faisceau laser en plusieurs autres faisceaux laser. Le domaine d'application de la technique divulguée par ce document est notamment celui de la restauration d'oeuvres d'art (monuments historiques, mobiliers en bois, verres, poteries) et également celui du nettoyage de tubes lors de leur fabrication ou de leur décalaminage ultérieur.

Il est également connu d'utiliser un faisceau laser pour contrôler l'état de contamination ou de pollution de la surface d'un solide. Ainsi, le document FR-A-2 714 464 divulgue un procédé de contrôle de la contamination, par laser mettant en oeuvre, en particulier, un dispositif d'aspiration des particules éjectées par le faisceau laser, en vue d'analyse desdites particules. Ce dispositif comprend notamment une enceinte présentant une ouverture destinée à recouvrir une zone de la surface à contrôler, l'enceinte étant pourvue d'une lame transparente à un faisceau laser destiné à extraire les particules à prélever, par son impact sur cette zone. L'enceinte comprend également un orifice d'entrée et un orifice de sortie permettant la circulation d'un gaz pour le transfert des particules et l'enceinte peut être munie d'un orifice d'entrée supplémentaire placé le plus près possible de la lame transparente de manière à ce que le gaz balaye cette lame.

L'impact d'un faisceau laser peut également être utilisé pour prélever, en vue d'une analyse, un échantillon d'un matériau. Le faisceau laser provoque la vaporisation de l'échantillon et la matière vaporisée est recueillie, par exemple par condensation sur un support (cf. DE-A-1 961 315) ou par l'intermédiaire d'un gaz porteur inerte (cf. US-A-4 220 414).

Dans le cas de la présente invention, l'impact d'un faisceau laser n'est pas utilisé pour enlever une couche polluante ou contaminante d'un matériau différent déposé à la surface d'un objet, ni pour prélever un échantillon de matériau en vue d'une analyse. L'impact d'un faisceau laser, de puissance appropriée, est utilisé pour provoquer la désincrustation photonique de poussières d'usinage présentes sur la surface de pastilles de combustible nucléaire, les pqussières étant de même nature que le matériau des pastilles et appartenant préalablement à ce matériau.

L'invention vise de plus à permettre de supprimer de la surface des pastilles toute particule constitutive susceptible de se désolidariser de la surface des pastilles lors de leurs manipulations ultérieures et cela par suite de fragilisation due à la rectification.

L'invention a donc pour objet un procédé de dépoussiérage d'au moins une pastille de combustible nucléaire ayant subi une opération de rectification qui a laissé subsister sur une surface de la pastille des poussières du matériau constituant cette pastille, caractérisé en ce qu'il consiste à :
- soumettre ladite surface à l'impact d'un faisceau laser de caractéristiques propres à provoquer la désincrustation des poussières de ladite surface,
- éliminer de ladite surface les produits résultant de la désincrustation des poussières.

Avantageusement, l'impact du faisceau laser sur ladite surface génère un effet de choc laser (c'est-à-dire que la puissance spécifique apportée par le faisceau laser est supérieure à 100 MW/cm²).

Si le faisceau laser est fixe, la pastille peut être mise en mouvement pour présenter la totalité de la surface à dépoussiérer à l'impact du faisceau laser.

Dans ce cas, si la pastille est un cylindre de révolution et si la surface à dépoussiérer est la surface cylindrique de la pastille à l'exclusion de ses bases, le mouvement de la pastille par rapport au faisceau laser peut être un mouvement de translation selon l'axe principal de la pastille associé à un mouvement de rotation de la pastille autour de son axe principal.

Le mouvement de la pastille, ou d'un ensemble de pastilles (par exemple 3), peut aussi être simplement un mouvement de rotation de la pastille ou de l'ensemble de pastilles autour de l'axe principal de la pastille ou de l'ensemble de pastilles, sans mouvement de translation par rapport au faisceau laser, si la tache du faisceau laser est de dimension suffisante pour couvrir la pastille ou l'ensemble de pastilles soumis à son impact.

L'invention a aussi pour objet un dispositif de dépoussiérage d'au moins une pastille de combustible nucléaire ayant subi une opération de rectification qui a laissé subsister sur une surface de la pastille des poussières du matériau constituant cette pastille, caractérisé en ce qu'il comporte :
- des moyens pour soumettre ladite surface à l'impact d'un faisceau laser de caractéristiques propres à provoquer la désincrustation des poussières de ladite surface,
- des moyens d'élimination de ladite surface des produits résultant de la désincrustation des poussières.

De préférence, le faisceau laser restant fixe, le dispositif comprend un mécanisme de mise en mouvement de la pastille afin de présenter la totalité de la surface à dépoussiérer à l'impact du faisceau laser.

Un tel mécanisme peut comprendre des moyens de mise en rotation de la pastille sur elle-même et, éventuellement,des moyens de translation de la pastille par rapport au faisceau laser.

L'invention sera mieux comprise et d'autres avantages et particularités apparaîtront à la lecture de la description qui va suivre, donnée à titre d'exemple non limitatif, accompagnée des dessins annexés parmi lesquels :
- la figure 1 est une vue d'ensemble d'une installation de dépoussiérage de pastilles de combustible nucléaire illustrative de la présente invention,
- la figure 2 montre un détail de l'installation de dépoussiérage de pastilles de combustible nucléaire illustrée par la figure 1,
- la figure 3 est une vue d'ensemble d'une installation industrielle de dépoussiérage de pastilles de combustible nucléaire selon la présente invention,
- la figure 4 est une vue de détail de l'installation représentée à la figure 3,
- la figure 5 est une vue de détail du dispositif représenté à la figure 4.

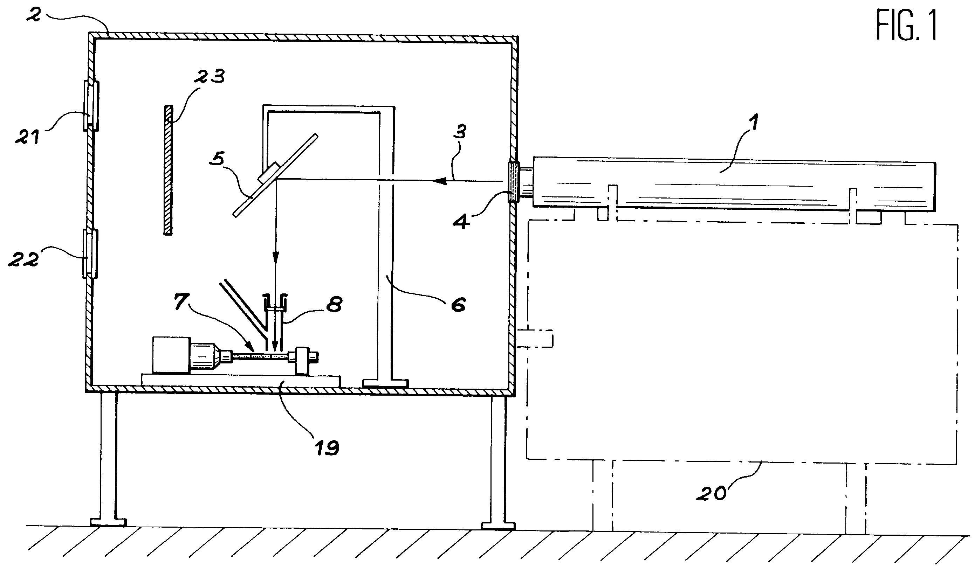

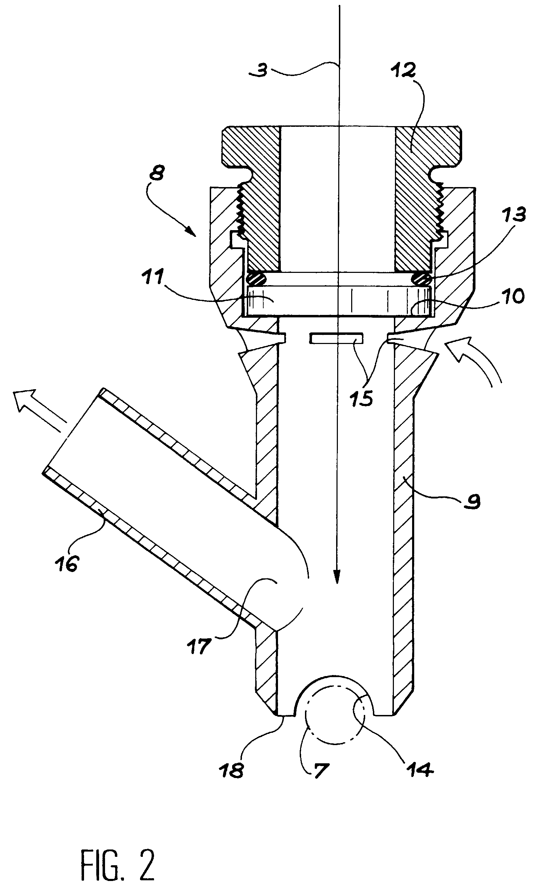

L'installation de dépoussiérage représentée à la figure 1, comporte une source laser 1 accostée à une boîte à gants 2 qui est nécessaire lorsqu'il s'agit du traitement de pastilles MOX. Le faisceau laser 3 pénètre dans la boîte à gants 2 après avoir traversé un hublot 4 en verre transparent disposé dans la paroi de la boîte à gants. Il est ensuite dirigé, au moyen d'un ou de plusieurs miroirs de renvoi tels que le miroir 5 porté par la potence 6, vers la zone où se trouvent les pastilles 7. Avant d'atteindre une pastille, le faisceau laser traverse un système d'aspiration qui est principalement constitué par un organe 8 destiné à récupérer les produits résultant de la désincrustation des poussières. L'organe 8 est montré plus en détail sur la figure 2.

Sur la figure 2, on a figuré également le faisceau laser 3 et une pastille 7 vue selon l'une de ses bases. L'organe 8 comprend un corps 9, de forme générale tubulaire, centré sur le faisceau laser 3. La partie supérieure du corps 9 est usinée pour former un siège 10 de réception d'une lame 11 qui est transparente au faisceau laser 3. L'extrémité supérieure du corps 9 est taraudée pour le vissage d'un bouchon tubulaire 12 destiné au maintien de la lame 11 en position sur son siège avec interposition d'un joint torique 13.

La partie inférieure du corps 9 est percée transversalement d'un canal demi-cylindrique 14, de diamètre légèrement supérieur au diamètre d'une pastille 7, et qui débouche dans l'ouverture inférieure 18 du corps 9. Cette ouverture est ainsi conformée pour chevaucher la pastille 7.

Le corps 9 est percé, dans sa partie comprise entre le siège 10 de la lame transparente 11 et le canal 14, de lumières 15. Ces lumières sont situées très près de la lame transparente 11.

Un conduit 16 est connecté sur la partie inférieure du corps 9 selon un axe incliné par rapport au faisceau laser 3, cet axe étant dirigé vers l'ouverture inférieure 18. Le conduit 16 rejoint le corps 9 en un orifice 17 appelé orifice d'aspiration.

En revenant à la figure 1, on peut noter que, dans cet exemple d'application de l'invention, les pastilles 7 sont au nombre de trois. Elles sont disposées sur un mécanisme de mise en mouvement 19 qui procure aux pastilles 7 un mouvement de translation par rapport au faisceau laser 3 combiné avec un mouvement de rotation des pastilles sur elles-mêmes. Ce double mouvement fait que toute la surface cylindrique des pastilles est soumise à l'impact du faisceau laser. Les bases des pastilles, qui n'ont pas été rectifiées, ne sont pas soumises à l'impact du faisceau laser.

Le mécanisme 19 peut comprendre une tige et un moyen de serrage agissant sur les extrémités de la colonne de pastilles.

L'installation comprend encore un groupe d'alimentation 20 pour le laser, des hublots d'observation 21 et 22 disposés sur une paroi de la boîte à gants 2 et un écran de protection 23 contre le faisceau laser.

Des essais ont été menés avec l'installation représentée à la figure 1. On a utilisé un laser YAG pulsé travaillant dans l'infrarouge (pour une longueur d'onde de 1064 nm). La cadence de tir était fonction de la vitesse d'avancement des pastilles sous le faisceau laser. Des résultats satisfaisants ont été obtenus pour des cadences de tir de 5 Hz et 10 Hz. Une fréquence de 20 Hz ou plus peut être envisagée pour une installation industrielle. La durée d'impulsion était de 7 ns environ. L'énergie par impulsion était de 1850 mJ, avec une puissance d'utilisation de 150 MW/cm² ± 10 MW/cm², délivrée telle quelle sur la surface de la pastille. La tache du faisceau laser peut être circulaire (d'un diamètre de 7, 9 ou 11 mm), elliptique (de dimensions 19 x 10 mm) ou encore rectangulaire (par exemple 50 x 2 mm). La tache rectangulaire peut être obtenue par mise en forme du faisceau laser au moyen de lentilles cylindriques d'anamorphose et d'une lentille convergente. Cette tache rectangulaire est préférée pour le dépoussiérage des pastilles car elle permet un recouvrement optimum lors du traitement.

Dans une installation industrielle on peut prévoir l'arrivée des pastilles en flux continu sous le faisceau laser.

Pour une meilleure efficacité du dépoussiérage, il est préférable que les poussières désincrustées soient aspirées. C'est le rôle de l'organe d'aspiration 8 qui est placé le plus près possible de la zone de la pastille en cours de traitement. Les lumières 15 de l'organe 8 sont raccordées à un tuyau d'amenée d'air ou de gaz neutre (par exemple de l'argon) non représenté. Le conduit 16 est relié à un circuit d'aspiration également non représenté.

La vitesse d'aspiration est de préférence comprise entre 20 m/s et 60 m/s, par exemple 40 m/s dans le cas des essais effectués. La disposition des lumières 15 à proximité de la lame transparente 11 permet, grâce au rideau de gaz ainsi réalisé, d'éviter que les poussières désincrustées ne se déposent sur la lame 11. L'effet de rideau est augmenté par le fait que l'écoulement dans la partie supérieure du corps 9 est descendant. Ceci empêche les remontées des poussières qui sont projetées à grande vitesse par le processus de désincrustation photonique. Si la vitesse d'aspiration est trop faible, il y a rétention des poussières dans le conduit 16. Si elle est trop importante, il se produit trop de turbulences, ce qui gêne l'application industrielle.

Une première série d'essais a été effectuée dans les conditions suivantes :
- rotation des pastilles : 50 tours/minute,
- translation des pastilles : 200 mm/minute,
- puissance laser : 70 à 160 MW/cm²,
- 1 ou 2 passes laser,
- fréquence laser : 5 ou 10 Hz,
- débit d'aspiration : 50 m³/h.

Il a été constaté que, pour une fréquence de 5 ou 10 Hz, des résultats satisfaisants sont obtenus pour des puissances laser supérieures à 100 MW/cm², en 1 ou 2 passes.

Une deuxième série d'essais a été effectuée dans les conditions suivantes :
- bases des pastilles soufflées,
- rotation des pastilles : 97 tours/minute,
- translation des pastilles : 1250 mm/minute
- puissance laser : 40 à 160 MW/cm²
- 1 ou 2 passes laser,
- fréquence laser : 10 Hz,
- débit d'aspiration : 25 m³/h.

Il a été constaté que des résultats très satisfaisants sont obtenus pour des puissances laser supérieures ou égales à 130 MW/cm² en particulier lorsque les bases des pastilles sont soumises à un débit de soufflage de 10 l/min.

Des tests par frottis ont également été réalisés. Avant le traitement laser selon la présente invention, les frottis indiquaient la présence de poussières. Après le traitement, aucune présence de poussières n'était décelable sur les frottis.

Les analyses de rugosité effectuées sur les échantillons issus des essais ci-dessus ont montré que cette rugosité n'était pas modifiée de manière significative par le traitement laser.

Le procédé selon l'invention présente les avantages suivants :
- pas de dégradation des pastilles,
- cadence de désempoussiérage importante,
- excellente efficacité du dépoussiérage.
L'examen au microscope électronique à balayage a révélé, qu'après le traitement selon la présente invention, il ne subsiste plus de poussières sur les surfaces traitées et que les pastilles ne sont pas endommagées.

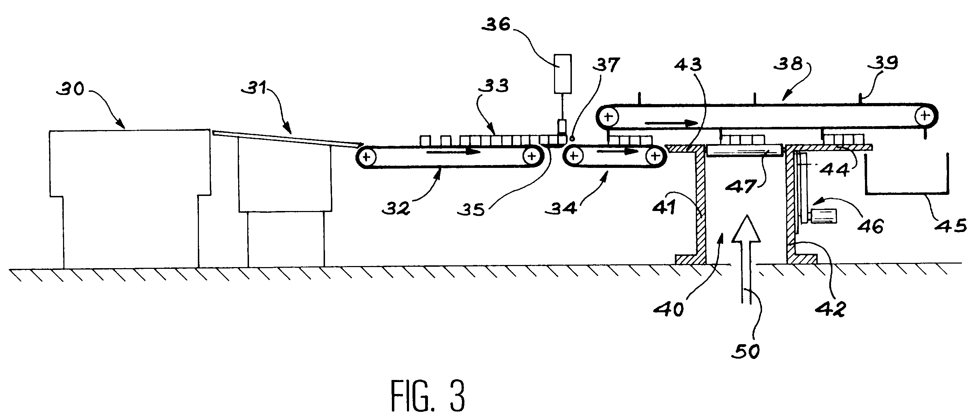

L'installation industrielle de dépoussiérage représentée à la figure 3 permet de traiter de manière automatique des pastilles en sortie de rectifieuse. L'installation fonctionne sur la base d'une chaîne cinématique composée de tapis motorisés et de bols vibrants et permet de traiter n pastilles à la fois. Dans le cas décrit par la figure 3, n est égal à 4.

Les pastilles à dépoussiérer contenues dans un bol vibrant 30 sont amenées grâce à un rail vibrant 31 sur un premier-tapis motorisé 32. A titre d'exemple, la vitesse d'avancement des pastilles est de 15 mm/s sur le rail vibrant 31 et de 30 mm/s sur le tapis motorisé 32. Grâce au rail vibrant, les pastilles se trouvent disposées sur le tapis motorisé 32 avec leur axe principal parallèle à la direction d'avancement, ce qui permet de constituer une colonne de pastilles 33.

Un deuxième tapis motorisé 34 est placé dans le prolongement du premier tapis motorisé 32 pour recevoir les pastilles alignées sur ce premier tapis motorisé. La jonction entre les tapis 32 et 34 est réalisée grâce à un patin ou ski 35. Le deuxième tapis motorisé 34 peut avoir une vitesse d'avancement de 60 mm/s.

Les pastilles sont envoyées successivement par colonnes de 4 sur le deuxième tapis 34 grâce à un dispositif de pinçage 36 permettant de retenir les pastilles sur le patin 35 ou de les relâcher. La constitution des colonnes est réalisée par comptage des pastilles au moyen d'un dispositif à fibre optique, l'extrémité de la fibre optique étant visible en 37.

Un troisième tapis motorisé 38, chevauchant partiellement le deuxième tapis motorisé 34 et dont la vitesse d'avancement est également de 60 mm/s, est équipé de languettes 39 disposées régulièrement sur la surface du tapis pour faire progresser chaque colonne de pastilles formée jusqu'à la zone de dépoussiérage 40 et au delà de cette zone de dépoussiérage.

La zone de dépoussiérage 40 est située entre deux panneaux verticaux 41 et 42. Le panneau 41 supporte un plan 43 d'amenée des colonnes de pastilles depuis le deuxième tapis motorisé 34 jusqu'à la zone de dépoussiérage 40. Le panneau 42 supporte un plan 44 d'évacuation des colonnes depuis la zone de dépoussiérage 40 jusqu'à un bac de réception des pastilles 45. Le panneau 42 supporte également un groupe 46 comprenant un moteur électrique et un système de transmission du mouvement de rotation généré par le moteur à deux rouleaux parallèles 47 et 48 (seul le rouleau 47 est visible sur la figure 3) disposés, libres en rotation, entre les panneaux 41 et 42. En 50, on a représenté le faisceau laser dirigé vers la colonne de pastilles supportées et mises en rotation par les rouleaux et poussées par une languette 39 du deuxième tapis motorisé 38.

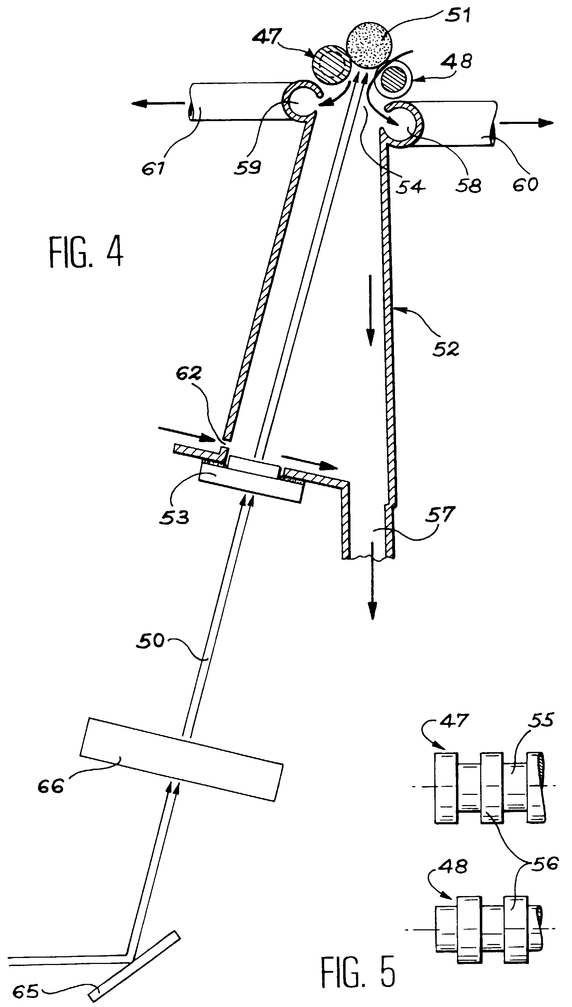

La figure 4 est une vue en coupe transversale des rouleaux 47 et 48 qui entraînent en rotation une pastille 51, faisant partie d'une colonne de pastilles, tout en permettant le traitement de cette pastille par le faisceau laser 50. La vitesse de rotation des pastilles peut-être de 1 tour/s. Cette figure montre également l'organe 52 de récupération des produits résultant de la désincrustation des poussières. Par souci de clarté, l'organe 52 n'a pas été représenté sur la figure 3.

L'organe 52 comporte une partie 53 transparente au faisceau laser 50 et une ouverture 54 disposée en vis-à-vis de la pastille 51 et permettant le passage du faisceau laser 50 et l'aspiration des produits obtenus. Comme on le voit sur la figure 4, le faisceau laser est décalé angulairement par rapport à la verticale afin d'éviter un empoussièrement de la lame transparente 53 par les grosses particules ou éclats venant des pastilles en cours de traitement.

L'ouverture 54 est allongée dans le sens des rouleaux 47 et 48 pour permettre de traiter la colonne de pastilles sur toute sa longueur au moyen d'un faisceau laser dont la tache est de 50 mm sur 2 mm.

L'écartement entre les rouleaux 47 et 48 et le bord adjacent de l'organe 52 est le plus faible possible. Les rouleaux 47 et 48 sont rainurés transversalement, comme le montre la figure 5 où ils sont représentés longitudinalement, afin de permettre l'introduction d'un gaz porteur. Il est préférable, au montage des rouleaux 47 et 48, de les disposer comme le montre la figure 5, c'est-à-dire de faire en sorte qu'à une rainure 55 du rouleau 47 corresponde une partie pleine 56 du rouleau 48.

L'organe 52 possède 3 buses d'aspiration : une buse 57 prévue dans la partie la plus basse de l'organe 52 et deux buses latérales 58 et 59 prévues près de l'ouverture 54. Les buses 58 et 59 sont raccordées respectivement à des conduits 60 et 61 pouvant comporter des diaphragmes afin d'équilibrer les débits d'aspiration. La vitesse du gaz véhiculé dans les conduits d'aspiration peut être de 20 m/s à 30 m/s. Les buses 58 et 59 sont avantageusement raccordées aux conduites par des queues de carpe de façon à maintenir une aspiration uniforme sur toute la longueur.

Une fente 62, disposée au niveau de la face interne de la partie transparente 53, permet d'injecter un gaz selon un débit réglable afin d'optimiser le dépoussiérage de la partie transparente 53. Cette fente peut être complétée par d'autres fentes disposées sur la même face oblique de l'organe 52, entre la fente 62 et la buse 59, de façon d'une part à créer des rideaux d'air complémentaires et d'autre part à favoriser la déflexion des poussières vers la buse 57. Une autre disposition consiste à privilégier l'aspiration par la buse 58 au détriment de la buse 59 de façon à favoriser la déflexion du panache de poussières vers la buse 57.

Sur la figure 4 sont représentés également un miroir pivotant 65 et un dispositif 66 de mise en forme du faisceau laser.

Le miroir pivotant 65 permet un nettoyage périodique des rouleaux rotatifs 47 et 48 par le faisceau laser 50.

## Revendications

1. Procédé de dépoussiérage d'au moins une pastille (7) de combustible nucléaire ayant subi une opération de rectification qui a laissé subsister sur une surface de la pastille des poussières du matériau constituant cette pastille, caractérisé en ce qu'il consiste à :
- soumettre ladite surface à l'impact d'un faisceau laser (3) de caractéristiques propres à provoquer la désincrustation des poussières de ladite surface,
- éliminer de ladite surface les produits résultant de la désincrustation des poussières.

2. Procédé selon la revendication 1, caractérisé en ce que l'impact du faisceau laser (3) sur ladite surface génère un effet de choc laser.

3. Procédé selon l'une des revendications 1 ou 2, caractérisé en ce que, le faisceau laser (3) étant fixe, la pastille (7) est mise en mouvement pour présenter la totalité de la surface à dépoussiérer à l'impact du faisceau laser.

4. Procédé selon la revendication 3, caractérisé en ce que plusieurs pastilles (7) sont disposées en un ensemble, la mise en mouvement consistant en une rotation de l'ensemble de pastilles.

5. Procédé selon la revendication 3, caractérisé en ce que, la pastille (7) étant un cylindre de révolution et la surface à dépoussiérer étant la surface cylindrique de la pastille à l'exclusion de ses bases, le mouvement de la pastille (7) par rapport au faisceau laser (3) est un mouvement de translation selon l'axe principal de la pastille associé à un mouvement de rotation de la pastille autour de son axe principal.

6. Procédé selon la revendication 5, caractérisé en ce que plusieurs pastilles (7) sont associées base contre base pour former une colonne soumise à l'impact du faisceau laser (3).

7. Procédé selon l'une quelconque des revendications 1 à 6, caractérisé en ce que le faisceau laser (3) possède une section rectangulaire.

8. Procédé selon l'une quelconque des revendications 1 à 7, caractérisé en ce que l'élimination des produits résultant de la désincrustation des poussières est réalisée par aspiration.

9. Procédé selon la revendication 8, caractérisé en ce que la surface soumise à l'impact du faisceau laser (3) est balayée par un flux gazeux dans une direction facilitant l'aspiration des produits résultant de la désincrustation des poussières.

10. Procédé selon l'une quelconque des revendications précédentes, caractérisé en ce qu'il se déroule à l'intérieur d'une enceinte close (2).

11. Dispositif de dépoussiérage d'au moins une pastille de combustible nucléaire (7) ayant subi une opération de rectification qui a laissé subsister sur une surface de la pastille des poussières du matériau constituant cette pastille, caractérisé en ce qu'il comporte :
- des moyens pour soumettre ladite surface à l'impact d'un faisceau laser (3) de caractéristiques propres à provoquer la désincrustation des poussières de ladite surface,
- des moyens d'élimination de ladite surface des produits résultant de la désincrustation des poussières.

12. Dispositif selon la revendication 11, caractérisé en ce que, le faisceau laser (3) restant fixe, le dispositif comprend un mécanisme (19) de mise en mouvement de la pastille (7) afin de présenter la totalité de la surface à dépoussiérer à l'impact du faisceau laser (3).

13. Dispositif selon la revendication 12, caractérisé en ce que le mécanisme de mise en mouvement de la pastille comprend deux rouleaux rotatifs (47, 48) supportant la pastille et lui transmettant un mouvement de rotation.

14. Dispositif selon la revendication 12, caractérisé en ce que ledit mécanisme (19) comprend des moyens de mise en rotation de la pastille sur elle-même et des moyens de translation de la pastille par rapport au faisceau laser (3).

15. Dispositif selon l'une quelconque des revendications 12 à 14, caractérisé en ce qu'il comporte également des moyens pour associer plusieurs pastilles (7) ensemble et pour soumettre l'ensemble ainsi constitué à l'impact du faisceau laser.

16. Dispositif selon l'une quelconque des revendications 12 à 15, caractérisé en ce qu'il comprend des moyens permettant de donner audit faisceau laser (3) une section rectangulaire.

17. Dispositif selon l'une quelconque des revendications 11 à 16, caractérisé en ce que les moyens d'élimination des produits résultant de la désincrustation des poussières comprennent un système d'aspiration.

18. Dispositif selon la revendication 17, caractérisé en ce que le système d'aspiration comprend un organe (8, 52) de récupération des produits résultant de la désincrustation des poussières, cet organe étant pourvu :
- d'une: partie (11, 53) transparente audit faisceau laser et disposée de façon à transmettre, par l'intérieur de l'organe (8, 52), le faisceau laser (3, 50) jusqu'à la pastille (7, 51),
- d'une ouverture (18, 54) destinée à être disposée en vis-à-vis de la pastille (7, 51), permettant le passage du faisceau laser (3, 50) et l'aspiration desdits produits,
- d'au moins un orifice (15) d'introduction d'un gaz porteur en direction de la pastille (7, 51),
- d'au moins un orifice (17, 57, 58, 59) d'aspiration du gaz porteur véhiculant lesdits produits.

19. Dispositif selon la revendication 18, caractérisé en ce que ledit orifice (15) d'introduction d'un gaz porteur est situé entre ladite partie transparente (11) et ladite ouverture (18), à proximité de la partie transparente.

20. Dispositif selon la revendication 19, caractérisé en ce que ladite ouverture (18) est conformée (14) de façon à chevaucher la pastille (7).

21. Dispositif selon la revendication 18, caractérisé en ce que, le mécanisme de mise en mouvement de la pastille (51) comprenant deux rouleaux rotatifs (47, 48) supportant la pastille et lui transmettant un mouvement de rotation, ledit organe (52) est disposé sous l'ensemble constitué par les rouleaux rotatifs et la pastille, l'ouverture (54) de l'organe servant d'orifice d'introduction du gaz porteur, au moins un orifice d'aspiration (58, 59) du gaz porteur étant situé à proximité de ladite ouverture (54).

22. Dispositif selon la revendication 21, caractérisé en ce que la partie (53) transparente au faisceau laser est disposée de façon à décaler angulairement le faisceau laser (50) par rapport à la verticale.

23. Dispositif selon l'une des revendications 21 ou 22, caractérisé en ce qu'il comprend un miroir (65) pour diriger le faisceau laser (50) vers la pastille (51), le miroir pouvant pivoter pour diriger le faisceau laser sur les rouleaux rotatifs (47, 48) afin de les nettoyer.
